# EUROPÄISCHE PATENTSCHRIFT

(11) **EP 1 870 646 B1**
(45) Veröffentlichungstag und Bekanntmachung des Hinweises auf die Patenterteilung: **14.08.2019**
(21) Anmeldenummer: 07110440.0
(22) Anmeldetag: 18.06.2007
(51) Int. Cl.: F25B 27/02, F01K 17/02, F01K 19/04

(54) **Verfahren und Vorrichtung zur Rückgewinnung von Kondensationswärme aus einem thermodynamischen Kreisprozess**
Method and device for recovery of condensation heat from a thermodynamic cyclical process
Procédé et dispositif destinés à la récupération de chaleur de condensation à partir d'un cycle thermodynamique

(30) Priorität: 19.06.2006 DE 102006028370; 24.10.2006 DE 102006050706
(43) Veröffentlichungstag der Anmeldung: 26.12.2007
(73) Patentinhaber: Fritz Egger GmbH & Co. OG, 6380 St. Johann in Tirol (AT)
(72) Erfinder: Obwaller, Georg, 6393, St. Ulrich am Pillersee (AT)
(74) Vertreter: Cohausz & Florack

(56) Entgegenhaltungen:
- WO-A1-95/20133
- BE-A- 489 030
- DE-A1- 19 730 353
- US-A1- 2005 223 728
- GERICKE B ET AL: "WAERMEVERSCHIEBESYSTEME IN GASTURBINENPROZESSEN", BWK BRENNSTOFF WARME KRAFT, SPRINGER VDI VERLAG, DUSSELDORF, DE, Bd. 48, Nr. 1/02, 1. Januar 1996 (1996-01-01), Seiten 33/34,37-46, XP000581443, ISSN: 1618-193X
- KAUSHIK S C ET AL: "STEAM RANKINE CYCLE COOLING SYSTEM: ANALYSIS AND POSSIBLE REFINEMENTS", ENERGY CONVERSION AND MANAGEMENT, ELSEVIER SCIENCE PUBLISHERS, OXFORD, GB, Bd. 35, Nr. 10, 1. Oktober 1994 (1994-10-01), Seiten 871-886, XP000469762, ISSN: 0196-8904, DOI: DOI:10.1016/0196-8904(94)90036-1

## Beschreibung

Die Erfindung betrifft ein Verfahren und eine Vorrichtung zur Rückgewinnung von Kondensationswärme aus einem thermodynamischen Kreisprozess.

Die Rückgewinnung von Nutzwärme aus einem thermodynamischen Kreisprozess ist aus der Kraftwerkstechnik bekannt. So ist es theoretisch möglich, in Dampfkraftanlagen die bei der Verflüssigung des in einer Dampfturbine zuvor entspannten Dampfes anfallende Kondensationswärme in einen Heizkreislauf einzukoppeln. Als problematisch erweist sich hierbei regelmäßig das zu niedrige Temperaturniveau in diesem Kreislauf, welches bei ca. 20 bis 35°C liegt.

Ein höheres Temperaturniveau lässt sich dadurch erreichen, dass der Dampf in der Dampfturbine nur so weit entspannt wird, bis ein vergleichsweise akzeptables Temperaturniveau im Kühlwasserkreislauf des Kondensators erreicht ist. Damit verbunden ist, dass die Kondensation des Dampfes im Kondensator auch bei entsprechend höherem Druck zu erfolgen hat. Dieses als Kraft-Wärme-Kopplung bezeichnete Prinzip hat den Nachteil, dass auch hier wesentliche Energiemengen auf einem nicht verwertbaren Temperaturniveau anfallen und dadurch ungenutzt bleiben.

Es ist daher die Aufgabe der Erfindung, ein Verfahren zur Rückgewinnung von Kondensationswärme aus einem thermodynamischen Kreisprozess anzugeben, welches in bestehenden Anlagen ohne größeren technischen Aufwand durchgeführt werden kann, keine Modifikation des thermodynamischen Kreisprozesses erfordert und Wärme auf einem universell nutzbaren Temperaturniveau liefert. Ferner soll eine Vorrichtung zur Ausführung des Verfahrens angegeben werden.

Die Aufgabe wird erfindungsgemäß mit einem Verfahren nach dem Patentanspruch 1 gelöst.

Mit dem erfindungsgemäßen Verfahren ist es möglich, einen Teil der in einem thermodynamischen Kreisprozess anfallenden Kondensationswärme als Nutzwärme auf einem erhöhten Temperaturniveau aus dem Kreislauf auszukoppeln, so dass die gewonnene Wärme für die verschiedensten innerbetrieblichen wie außerbetrieblichen Anwendungen, wie die Beheizung von Gebäuden, die Materialtrocknung oder für sonstige Produktionsprozesse, genutzt werden kann. So wird beispielsweise die Wärme in einen Nutzwärmekreislauf, insbesondere einen Fernwärmekreislauf eingespeist.

Da das Anheben auf ein höheres Temperaturniveau bei dem ausgeleiteten Teil des Arbeitsmediums unabhängig von dem thermodynamischen Kreisprozess erfolgen kann, muss dieser nicht an die angestrebte Nutzwärmeauskopplung angepasst werden.

Der Anteil des Arbeitsmediums, welcher aus dem thermodynamischen Kreisprozess ausgeleitet wird, lässt sich durch einfache technische Mittel, beispielsweise durch ein geeignetes Ventilsystem, variabel einstellen, so dass unabhängig von der in dem thermodynamischen Kreisprozess jeweils umgesetzten Energie auch die Wärmemenge, die auf erhöhtem Temperaturniveau pro Zeiteinheit als Nutzwärme ausgekoppelt wird, in Abhängigkeit von der jeweiligen Anwendung eingestellt werden kann.

Für den thermodynamischen Kreisprozess stehen verschiedene Arbeitsmedien zur Verfügung. Besonders geeignet, auch vor dem Hintergrund niedrig zu haltender Betriebskosten, ist hierbei der Einsatz von Wasser als Arbeitsmedium, insbesondere enthärtetem und entgastem Wasser.

Nach einer besonders bevorzugten Ausgestaltung der Erfindung läuft der thermodynamische Kreisprozess in einer Dampfkraftanlage ab, wobei die Verdichtung des Arbeitsmediums in einer Speisepumpe, die Verdampfung des Arbeitsmediums in einem Dampfkessel, die Entspannung des Arbeitsmediums in einer Dampfturbine und die Kondensation des Arbeitsmediums in einem Kondensator erfolgt. In einer solchen Dampfkraftanlage wird das Arbeitsmedium nach der Verdampfung im Dampfkessel vorzugsweise noch überhitzt.

Weltweit existieren noch viele Dampfkraftwerke mit Kondensationsturbinen, bei denen es nicht mehr wirtschaftlich ist, auf Entnahme-Gegendruckturbinen umzurüsten. Insbesondere bei diesen kann das technisch ohne großen Aufwand umsetzbare erfindungsgemäße Verfahren mit hohem Nutzwert eingesetzt werden, um die schlecht nutzbare Kondensationstemperatur von 50° bis 70°C auf ein für verschiedene inner- wie außerbetriebliche Anwendungen verwertbares Niveau von 90° bis 100°C anzuheben.

Nach einer Ausgestaltung der Erfindung wird der ausgeleitete Teil des Arbeitsmediums durch Verdichtung auf ein höheres Temperaturniveau angehoben und anschließend kondensiert, wobei die anfallende Kondensationswärme als Nutzwärme ausgekoppelt wird. Vorzugsweise beträgt die Temperatur des ausgeleiteten Teils des Arbeitsmediums vor der Verdichtung ca. 40°C bis ca. 86°C, vorzugsweise ca. 50°C bis 80°C, insbesondere 60°C bis 75°C, während der Verdampfungsdruck des ausgeleiteten Teils des Arbeitsmediums vor der Verdichtung bevorzugt ca. 0,07 bar bis ca. 0,60 bar, vorzugsweise ca. 0,12 bis 0,47 bar, insbesondere 0,20 bar bis 0,39 bar beträgt. Durch die Verdichtung wird der Druck des ausgeleiteten Teils des Arbeitsmediums auf einen Wert von ca. 0,8 bar bis ca. 1,2 bar, vorzugsweise ca. 0,90 bar bis ca. 1,1 bar, insbesondere ca. 0,95 bar bis 1,0 bar erhöht, wobei die Temperatur des Arbeitsmediums durch die Verdichtung bevorzugt auf einen Wert von 160°C bis 220°C, vorzugsweise 170°C bis 210°C, insbesondere ca. 180°C bis 200°C, erhöht wird. Hierbei arbeitet der Verdichter vorzugsweise mit einem isentropen Wirkungsgrad von 85% bis 90%, vorzugsweise ca. 86% bis 88%.

Nach besonders bevorzugten Ausgestaltung des erfindungsgemäßen Verfahrens wird die Wärme des ausgeleiteten Teils des Arbeitsmediums in einem ersten Wärmetauscher auf ein weiteres Arbeitsmedium übertragen, wobei die übertragene Wärme des Arbeitsmediums als Wärme des weiteren Arbeitsmediums sodann auf ein höheres Temperaturniveau angehoben und anschließend in einem zweiten Wärmetauscher als Nutzwärme in einen Nutzwärmekreislauf ausgekoppelt wird. Bevorzugt handelt es sich hierbei um eine Wärmepumpe, wobei verschiedene Arten von Wärmepumpen zum Einsatz kommen können.

Besonders bevorzugt wird eine Absorptionswärmepumpe eingesetzt. Hierbei erfolgt die Übertragung der Wärme von dem Arbeitsmedium auf das weitere Arbeitsmedium im Verdampfer der Absorptionswärmepumpe als erstem Wärmetauscher, wobei das Arbeitsmedium kondensiert, wobei das weitere Arbeitsmedium in der Absorptionswärmepumpe als deren Kältemittel zirkuliert und die Nutzwärme im Absorber und/oder im Kondensator der Absorptionswärmepumpe als zweitem Wärmetauscher ausgekoppelt wird.

Bei Absorptionswärmepumpen handelt es sich um technisch ausgereifte Systeme. Sie sind am Markt bekannt und kommen in den verschiedensten Zweigen der Technik als Wärme- oder Kältemaschinen zum Einsatz. Ferner zeichnen sie sich durch ein hohes Maß an Wirtschaftlichkeit und Langlebigkeit aus und sind in für die unterschiedlichen Anwendungen optimierter Bauweise erhältlich.

Bevorzugt wird in der Absorptionswärmepumpe Wasser als Arbeitsmedium verwendet, wobei das Wasser in einer Lithiumbromid-Lösung periodisch in einem Absorber gelöst und in einem Austreiber ausgetrieben wird.

Als Antriebsenergie für die Absorptionswärmepumpe dient bekanntlich nicht - wie im Falle einer Kompressionswärmepumpe - Strom, sondern Heißwasser oder Dampf. Im Falle des Einsatzes in einer Dampfkraftanlage kann die Antriebsenergie für den Austreiber der Absorptionswärmepumpe in vorteilhafter Weise durch aus einer Entnahmestufe der Dampfturbine entnommenen Dampf bereitgestellt werden. Hierbei hat der entnommene Dampf bevorzugt einen Druck von ca. 12 bar und eine Temperatur von ca. 250°C.

Neben der Einkopplung der Wärme des aus einer Entnahmestufe der Dampfturbine entnommenen Dampfes in den Austreiber der Absorptionswärmepumpe ist es ferner möglich, die Wärme über einen Wärmetauscher direkt in den Nutzwärmekreislauf einzukoppeln. Dies hat den Vorteil, dass die Bereitstellung der Nutzwärme auch im Falle des Ausfalls oder der wartungsbedingten Abschaltung der Absorptionswärmepumpe aufrecht erhalten werden kann.

Neben der Verwendung von aus einer Entnahmestufe der Dampfturbine entnommenem Dampf kann die Antriebsenergie der Absorptionswärmepumpe auch einem Thermalölkreislauf oder einem Heißwasser- oder Dampfkreislauf entnommen werden. Thermalöl als Wärmeträgermedium wird in verschiedenen Produktionsprozessen, beispielsweise in der Holzverarbeitung, eingesetzt. Heißwasser oder Dampf kann in einem entsprechenden gas- oder biomassebefeuerten Kessel erzeugt werden.

Die eingangs genannte Aufgabe wird auch durch eine Vorrichtung zur Rückgewinnung von Nutzwärme aus einem thermodynamischen Kreisprozess nach dem Patentanspruch 19 dadurch gelöst.

Die Vorrichtung ist durch eine geringfügige Modifikation bestehender Anlagen realisierbar, indem nämlich eine Leitungsbrücke mit den Mitteln zum Anheben der Wärme des in die Leitungsbrücke ausgeleiteten Arbeitsmediums auf ein höheres Temperaturniveau in den bestehenden geschlossenen Leitungszyklus integriert wird. Für die Vorteile der erfindungsgemäßen Vorrichtung gilt das vorstehend Gesagte.

Nach einer besonders bevorzugten Ausgestaltung der Erfindung ist die Vorrichtung als Dampfkraftanlage ausgebildet, wobei der Verdichter als Speisepumpe ausgebildet ist, wobei der Verdampfer als Dampfkessel ausgebildet ist und wobei die Expansionseinheit als Dampfturbine ausgebildet ist. Die Dampfkraftanlage kann hierbei als Teil eines Dampfkraftwerks, insbesondere eines Dampfkraftwerks mit Kraft-Wärme-Kopplung oder ein Dampfkraftwerk mit Kondensationsturbine, ausgebildet sein, wobei als Arbeitsmedium selbstverständlich Wasser bzw. Dampf zum Einsatz kommt.

Die Dampfkraftanlage kann weitere Besonderheiten aufweisen. So kann die Dampfkraftanlage vor der das Arbeitsmedium verdichtenden Speisepumpe einen Speisetank aufweisen. Ferner kann zwischen dem Kondensator und dem Speisetank eine Kondensatpumpe vorgesehen sein. Darüber hinaus ist es möglich, dass der in den geschlossenen Leitungszyklus integrierte Kondensator, welcher der Verflüssigung des Arbeitsmediums, wiederum vorzugsweise Wasser, insbesondere enthärtetes und entgastes Wasser, dient, als Dampf-Wasser-Wärmetauscher ausgebildet ist. Schließlich kann bei der als Dampfkraftanlage ausgebildeten Vorrichtung ein Überhitzer vorgesehen sein, welcher den im Dampfkessel erzeugten Dampf noch überhitzt.

Im Folgenden wird die Erfindung anhand einer Ausführungsbeispiele darstellenden Zeichnung näher erläutert. Es zeigen:
- Fig. 1: Eine Vorrichtung zur Rückgewinnung von Kondensationswärme aus einer Dampfkraftanlage mit einer Absorptionswärmepumpe im Blockschaltbild,
- Fig. 2: die Vorrichtung aus Fig. 1 in geringfügig modifizierter Ausführung,
- Fig. 3: Die Absorptionswärmepumpe der Vorrichtung aus Fig. 1 in vergrößerter Detaildarstellung und
- Fig. 4: eine weitere Vorrichtung zur Rückgewinnung von Kondensationswärme aus einer Dampfkraftanlage.

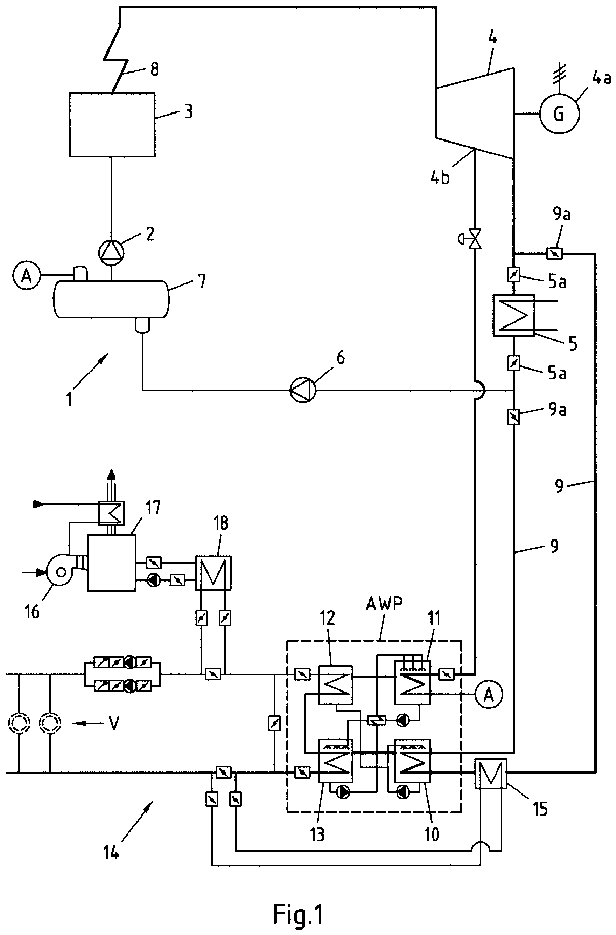

In Fig. 1 ist eine erfindungsgemäße Vorrichtung zur Rückgewinnung von Kondensationswärme aus einem thermodynamischen Kreisprozess im Blockschaltbild dargestellt.

Die Vorrichtung ist vorliegend als Dampfkraftanlage ausgebildet und umfasst einen geschlossenen Leitungszyklus 1. In Strömungsrichtung eines Arbeitsmediums - vorliegend enthärtetes und entgastes Wasser - gesehen umfasst die Dampfkraftanlage als Grundkomponenten eine Speisewasserpumpe 2, einen Dampfkessel 3, eine Dampfturbine 4, in der der Dampf unter Energieabgabe entspannt wird, einen mit der Turbinenwelle verbundenen Generator 4a zur Erzeugung elektrischen Stroms sowie einen Kondensator 5, in welchem der entspannte Dampf verflüssigt wird. Ferner umfasst die Dampfkraftanlage noch eine Kondensatpumpe 6, einen Speisewassertank 7 sowie einen hinter dem Dampfkessel angeordneten Überhitzer 8 zur Dampfüberhitzung.

Bei der vorliegenden Blockschaltbilddarstellung der Fig. 1 bis 4 sind die Bereiche, in denen das Arbeitsmedium als Dampf strömt mit fetten Linien gezeichnet, während die Bereiche, wo das Arbeitsmedium im kondensierten Zustand, d.h. als Wasser, strömt, mit dünnen Linien gezeichnet sind.

Erfindungsgemäß weist die Dampfkraftanlage neben dem geschlossenen Leitungszyklus 1 eine Leitungsbrücke 9 auf, mit welcher der Kondensator 5 überbrückt wird. In die Leitungsbrücke 9 ist der Verdampfer 10 einer Absorptionswärmepumpe AWP integriert. Ferner umfasst die Dampfturbine 4 eine Entnahmestufe 4b, über die teilentspannter Dampf entnommen werden kann. Dieser kann dann in den Austreiber 11 der Absorptionswärmepumpe AWP eingeleitet werden, wo er die für die Austreibung notwendige Energie an das Arbeitsmedium der Absorptionswärmepumpe abgeben kann. Vorzugsweise hat der teilentspannte Dampf einen Druck von ca. 12 bar und eine Temperatur von ca. 250°C an der Entnahmestufe 4b, wobei die Dampftemperatur zügig auf eine Sattdampftemperatur von ca. 188°C abkühlt, die sodann am Eingang des Antreibers 11 für den dort anfallenden Prozess der Austreibung zur Verfügung steht. Alternativ kann anstelle von teilentspanntem Dampf aus der Dampfturbine auch Thermalöl aus verschiedenen Produktionsprozesses oder Heißwasser als Energiequelle für den Austreiber 11 der Absorptionswärmepumpe AWP eingesetzt werden.

Der Ausgang des Austreibers 11 ist mit einer aus Gründen der Übersichtlichkeit nicht vollständig eingezeichneten Kondensatleitung A mit dem Speisewassertank 7 der Dampfkraftanlage verbunden.

Die Betriebsweise der erfindungsgemäßen Vorrichtung ist die Folgende:
Das Wasser aus dem Speisewassertank 7 wird in der als Verdichter fungierenden Speisewasserpumpe 2 auf hohen Druck gebracht und gelangt so in den als Verdampfer fungierenden Dampferzeuger 3. Das unter hohem Druck stehende Wasser wird dort unter Wärmezufuhr bis zum Siedepunkt erhitzt, verdampft und anschließend im Überhitzer 8 noch überhitzt. Der Dampf strömt sodann in die Dampfturbine 4, wo er unter Abgabe von Energie an den Generator 4a entspannt wird und abkühlt, beispielsweise auf einen Druck von 0,20 bar und eine Temperatur von 60°C. Ferner wird der Dampfturbine 4 an der Entnahmestufe 4b teilentspannter Dampf entnommen und zum Antrieb der Absorptionswärmepumpe AWP verwendet, wie im Folgenden noch näher erläutert wird.

Erfindungsgemäß wird nun der vollständig entspannte Dampf hinter der als Kondensationsturbine ausgebildeten Dampfturbine 4 aufgeteilt, wobei ein Teil des Dampfes aus dem Leitungszyklus 1 ausgeleitet und in die Leitungsbrücke 9 eingeleitet wird. Dort strömt der ausgeleitete Teil des Dampfes durch den Verdampfer 10 der Absorptionswärmepumpe, wo der Dampf kondensiert und als flüssiges Kondensat zur Kondensatpumpe 6 strömt.

Der nicht in die Leitungsbrücke 9 eingeleitete Teil des aus der Kondensationsturbine 4 ausströmenden vollentspannten Dampfes wird in herkömmlicher Weise im Kondensator 5 unter Wärmeabgabe auf niedrigem Temperaturniveau - je nach Jahreszeit und je nach Auslegung und Bauart des Kondensators 5 beträgt dies 50°C - 70°C, vorzugsweise 60°C - verflüssigt und nach Vereinigung mit dem aus dem Verdampfer 10 der Absorptionswärmepumpe AWP ausströmenden Kondensat der Kondensatpumpe 6 zwecks Rückführung in den Speisewassertank 7 zugeleitet.

Der jeweilige Anteil des in die Leitungsbrücke 9 ausgeleiteten Dampfes und des durch den Kondensator 5 strömenden Dampfes lässt sich präzise durch entsprechende Ventile 5a, 9a einstellen.

In der Absorptionswärmepumpe AWP wird nun die Wärme des ausgeleiteten Teils des Arbeitsmediums der Dampfkraftanlage (Wasser) auf ein weiteres Arbeitsmedium, nämlich das der Absorptionswärmepumpe AWP übertragen. Bei dem Arbeitsmedium der Absorptionswärmepumpe AWP handelt es sich bevorzugt um eine Wasser-Lithiumbromid-Lösung.

Die auf das Arbeitsmedium der Absorptionswärmepumpe AWP übertragene Wärme wird in dieser auf ein höheres Temperaturniveau angehoben und anschließend als Nutzwärme im Absorber 13 und im Kondensator 12 der Absorptionswärmepumpe AWP in einen Nutzwärmekreislauf 14 ausgekoppelt. Das dort zirkulierende Wärmeträgermedium gibt diese Wärme sodann an eine Anzahl von Verbrauchern V ab.

Vor Einströmen in den Verdampfer 10 der Absorptionswärmepumpe AWP durchströmt der ausgeleitete Teil des in der Kondensationsturbine 4 entspannten Dampfes noch ein Wärmetauscher 15, welcher seinerseits mit dem Nutzwärmekreislauf 14 verbunden werden kann.

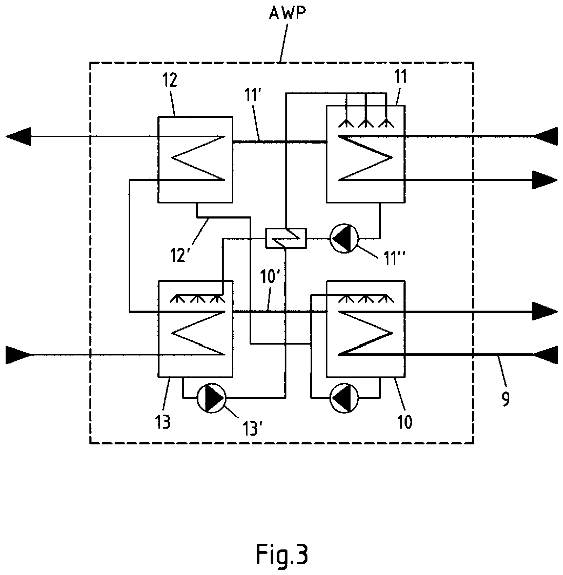

Die auf der Lösung von Wasserdampf in einer Lithiumbromid-Salzlösung mit anschließender Austreibung basierende Absorptionswärmepumpe AWP ist in Fig. 3 im Detail dargestellt und wird im Folgenden näher erläutert:
Wie in Fig. 1 gezeigt, durchläuft der in die Leitungsbrücke 9 ausgeleitete Teil des entspannten Dampfes den Verdampfer 10 der Absorptionswärmepumpe AWP und verdampft dort Wasser, wobei der auf Seiten der Leitungsbrücke 9 strömende Dampf kondensiert. Der in dem Verdampfer 10 auf Seiten der Absorptionswärmepumpe AWP erzeugte Wasserdampf strömt über eine Dampfleitung 10' zum Absorber 13, wo er von der stark hygroskopischen Lithiumbromid-Lösung aufgenommen wird. Die dabei entstehende Lösungswärme wird an das Wärmeträgermedium des Nutzwärmekreislaufs 14, welches ggf. zuvor im Wärmetauscher 15 bereits erwärmt wurde, abgegeben.

Die durch die Aufnahme des Wasserdampfs verdünnte Lithiumbromid-Lösung wird sodann von einer Flüssigkeitspumpe 13' zum Austreiber 11 gefördert, wo sie durch Zufuhr der Wärme des in der Entnahmestufe 4b aus der Dampfturbine 4 ausgeleiteten teilenspannten Dampfes wieder eingedampft, d.h. aufkonzentriert, wird. Der im Austreiber 11 durch Eindampfen der Lithiumbromid-Lösung entstehende Wasserdampf wird über eine weitere Dampfleitung 11' in den Kondensator 12 geleitet. Dort wird er unter Wärmeabgabe an das Wärmeträgermedium des Nutzwärmekreislaufs 14 kondensiert und strömt als verflüssigtes Arbeitsmedium über eine Wasserleitung 12' wieder zum Verdampfer 10, wo es erneut verdampft wird. Gleichzeitig wird die eingedampfte Lithiumbromid-Lösung über die Lösungspumpe 11" wieder in den Absorber 13 gepumpt.

Das somit zunächst im Absorber 13 und anschließend im Kondensator 12 erwärmte Wärmeträgermedium des Nutzwärmekreislaufs 14 wird vorliegend von einer Temperatur von ca. 50°C - 55°C am Eingang des Absorbers 13 auf eine Temperatur von ca. 90°C - 100°C, vorzugsweise 95°C am Ausgang des Kondensators 12 erwärmt. Diese Temperatur stellt nun die Nutzwärmevorlauftemperatur dar und kann im Gegensatz zu der Temperatur des über die Leitungsbrücke 9 ausgeleiteten Dampfes von ca. 50°C - 70°C, vorzugsweise 60°C für eine Vielzahl inner- oder außerbetrieblicher Anwendungen genutzt werden.

Im Falle eines Ausfalls der Absorptionswärmepumpe AWP oder im Falle eines wartungsbedingten Abschaltens kann die für den Nutzwärmekreislauf 14 erforderliche Wärme auch durch einen Reservebrenner, beispielsweise einen Erdgasbrenner 16, welcher einen Heißwasserkessel 17 beheizt, zur Verfügung gestellt werden, wobei die Wärme des in dem Kessel 17 erzeugten Heißwassers über einen weiteren Wärmetauscher 18 an das Wärmeträgermedium des Nutzwärmekreislaufs 14 abgegeben wird. Der Heißwasserkessel 17 kann auch zusätzlich zur Absorptionswärmepumpe AWP betrieben werden, wenn besonders viele Verbraucher V an den Nutzwärmekreislauf 14 angeschlossen sind (Spitzenlast) und gleichzeitig dessen Wärme abrufen.

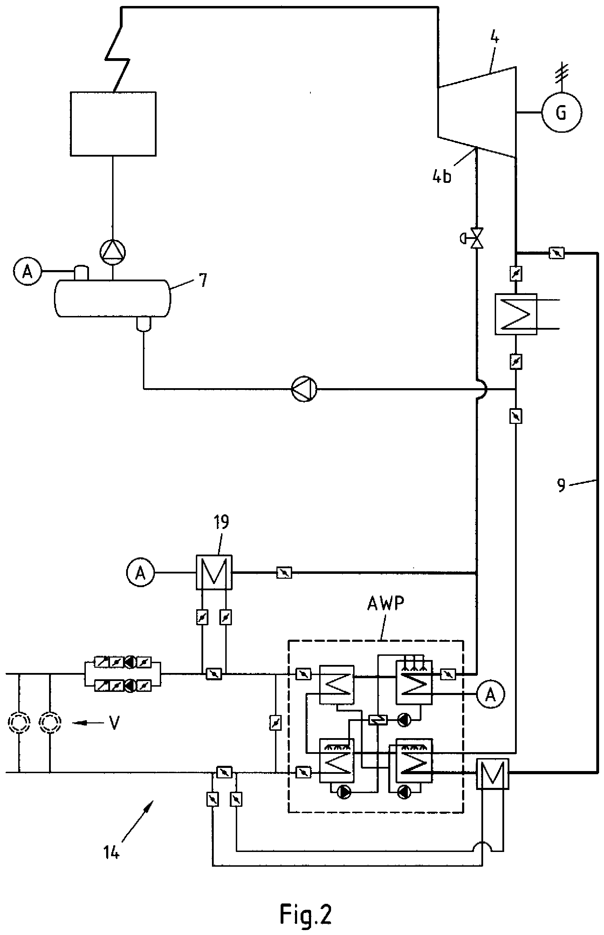

Das in Fig. 2 dargestellte Blockschaltbild einer Dampfkraftanlage mit Leitungsbrücke 9 und Absorptionswärmepumpe AWP unterscheidet sich von dem in Fig. 1 dargestellten lediglich dadurch, dass anstelle des Heißwasserkessels 17 ein weiterer Wärmetauscher 19 vorgesehen ist, über welchen die Wärme des über die Entnahmestufe 4b aus der Dampfturbine 4 ausgeleiteten teilentspannten Dampfes unmittelbar an den Nutzwärmekreislauf 14 übertragen werden kann, wobei der Dampf in dem Wärmetauscher 19 kondensiert und über die nicht dargestellte Rückleitung A direkt in den Speisewassertank 7 zurückgeführt wird. Die zusätzliche Nutzung des Wärmetauschers 19 kann wiederum im Falle von Spitzenlasten im Nutzwärmekreislauf 14 sowie im Falle des Ausfalls der Absorptionswärmepumpe AWP sinnvoll sein.

In der folgenden Tabelle sind drei Lastpunkte der Dampfturbine 4 der Dampfkraftanlage gemäß Fig. 1 und 2 mit sämtlichen relevanten Betriebsparametern aufgeführt. Der Lastpunkt L1 betrifft den Betriebszustand, bei dem der Generator 4a mit maximaler elektrischer Leistung betrieben wird, was einer Entnahmedampfrate von 4,5 t/h entspricht.

| Lastpunkt | | L1 | L2 | L3 |
|---|---|---|---|---|
| | | Maximalleistung | 10 t/h Entnahme | 20 t/h Entnahme |
| Frischdampf Druck | bar(a) | 64 | 64 | 64 |
| Frischdampf Enthalpie | kJ/kg | 3297 | 3297 | 3297 |
| Frischdampf Temperatur | °C | 450 | 450 | 450 |
| Frischdampf Menge | t/h | 45 | 45 | 45 |
| Frischdampf Wärmeleistung | MW | 35,5 | | |
| | | | | |
| Entnahme Druck | bar(a) | 12 | 12 | 12 |
| Entnahme Dampf Enthalpie | kJ/kg | 2,934 | 2,934 | 2,934 |
| Entnahme Dampf Temperatur* | °C | 249.1 | 249.1 | 249.1 |
| Entnahme Dampf Menge | t/h | 4.5 | 10 | 20 |
| Entnahme Wärmeleistung | MW | 2,7 | | |
| | | | | |
| Anzapfung Druck | bar(a) | 1.34 | 1.15 | 0.82 |
| Anzapfung Enthalpie | kJ/kg | 2,596 | 2,596 | 2,598 |
| Anzapfung Temperatur* | °C | 108 | 104 | 94 |
| Anzapfung Menge | t/h | 2.5 | 2.16 | 1.55 |
| Anzapfung Wärmeleistung | MW | 1,5 | | |
| Kondensations-Druck | bar(a) | 0.2 | 0.154 | 0.094 |
| Abdampf-Enthalpie | kJ/kg | 2,397 | 2,396 | 2,401 |
| Kondensations-Temperatur | °C | 60 | 55 | 45 |
| Abdampf-Menge | t/h | 38.00 | 32.84 | 23.45 |
| Abdampf Feuchte | % | 9.0% | 8.6% | 7.5% |
| Abdampf Wärmeleistung | MW | 22,5 | | |
| | | | | |
| **Elektrische Leistung** | **MWₑₗ** | **10,027** | **9,248** | **7,791** |

Durch das erfindungsgemäße Verfahren kann somit die Abdampfwärmeleistung von 22,5 MW (Lastpunkt L1) durch die Erhöhung des Temperaturniveaus in der Absorptionswärmpumpe AWP weiter genutzt werden, wobei dies nicht auf Kosten der Dampfentnahme und entsprechend nicht auf Kosten der Generatorleistung erfolgt.

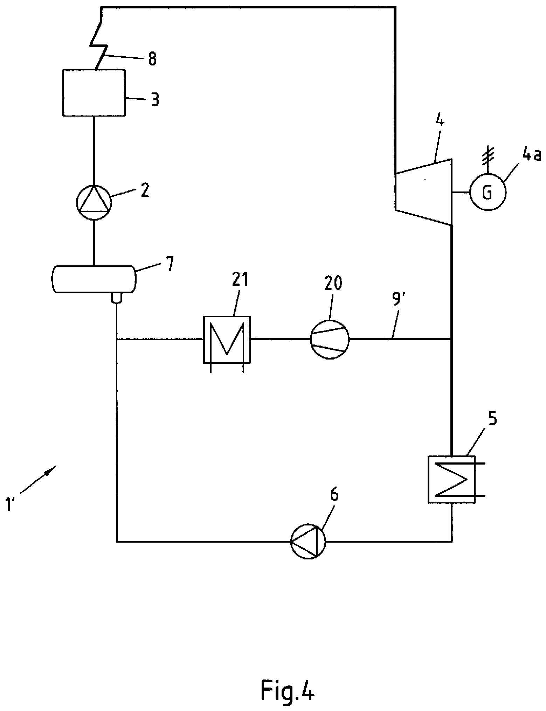

In Fig. 4 ist schließlich eine weitere Vorrichtung zur Rückgewinnung von Kondensationswärme aus einer Dampfkraftanlage dargestellt. Die Dampfkraftanlage umfasst wiederum einen geschlossenen Leitungszyklus 1' mit einem Dampfkessel 3, einem Überhitzer 8, einer Dampfturbine 4 mit angeschlossenem Generator 4a sowie einem Kondensator 5, einer Kondensatpumpe 6, einem Speisewassertank 7 und einer Speisewasserpumpe 2.

Erfindungsgemäß wird hier der entspannte Dampf hinter der Dampfturbine 4 aufgeteilt, wobei ein Teil des Dampfes aus dem Leitungszyklus 1' der Dampfkraftanlage gemäß Fig. 4 ausgeleitet und in die Leitungsbrücke 9' eingeleitet wird. Dort wird dieser Teil in dem Verdichter 20 erneut verdichtet. Durch diese Verdichtung wird wiederum überhitzter Dampf mit einem Druck von ca. 1 bar und 192°C erzeugt, der in der Leitungsbrücke 9' weiter in den Kondensator 21 gelangt. Dort wird der Dampf verflüssigt und abgekühlt, wobei die dabei abgegebene Kondensationswärme in einen Nutzwärmekreislauf eingekoppelt wird (nicht dargestellt). Aufgrund der hohen Temperatur des in den Kondensator einströmenden Dampfes von vorliegend 192°C, kann die Kondensationswärme auf einem hohen Temperaturniveau ausgekoppelt werden, so dass in dem Nutzwärmekreislauf dessen Wärmeträgermedium von 70°C auf 90°C erwärmt wird und mit dieser hohen Temperatur für eine Reihe denkbarer Anwendungen zur Verfügung steht.

Wiederum wird der nicht in die Leitungsbrücke 9' eingeleitete Teil in dem Kondensator 5 verflüssigt, wobei er Kondensationswärme auf niedrigem Niveau abgibt. Das aus dem Kondensator 5 austretende Wasser wird in der Kondensatpumpe 6 weiter gefördert und vereinigt sich vor Eintritt in den Speisewassertank 7 mit dem aus dem Kondensator 21 über die Leitungsbrücke 9' austretenden Wasser. Mit dem Eintritt in den Speisewassertank 7 beginnt der Zyklus von Neuem.

## Patentansprüche

1. Verfahren zur Rückgewinnung von Kondensationswärme aus einem thermodynamischen Kreisprozess, bei dem
- in dem thermodynamischen Kreisprozess ein Arbeitsmedium verdichtet, verdampft, entspannt und in einem Kondensator (5) kondensiert wird,
- nach der vollständigen Entspannung des Arbeitsmediums zumindest ein Teil des Arbeitsmediums vor Eintritt in den Kondensator aus dem Kreisprozess ausgeleitet wird,
- der ausgeleitete Teil des Arbeitsmediums den Kondensator (5) überbrückt,
- die Wärme des ausgeleiteten Teils des Arbeitsmediums auf ein höheres Temperaturniveau angehoben und anschließend als Nutzwärme in einen Nutzwärmekreislauf (14), insbesondere einen Fernwärmekreislauf, ausgekoppelt wird und
- anschließend das Arbeitsmedium in den thermodynamischen Kreisprozess wieder eingeleitet wird, so dass der ausgeleitete Teil des Arbeitsmediums gemeinsam mit dem im thermodynamischen Kreisprozess verbliebenen Teil des Arbeitsmediums wieder verdichtet wird.

2. Verfahren nach Anspruch 1,
**dadurch gekennzeichnet, dass** als Arbeitsmedium Wasser, vorzugsweise enthärtetes und entgastes Wasser, verwendet wird.

3. Verfahren nach einem der Ansprüche 1 oder 2,
**dadurch gekennzeichnet, dass**
der thermodynamische Kreisprozess in einer Dampfkraftanlage abläuft, wobei die Verdichtung des Arbeitsmediums in einer Speisepumpe (2), die Verdampfung des Arbeitsmediums in einem Dampfkessel (3), die Entspannung des Arbeitsmediums in einer Dampfturbine (4) und die Kondensation des Arbeitsmediums in einem Kondensator (5) erfolgt.

4. Verfahren nach Anspruch 3,
**dadurch gekennzeichnet, dass**
die Dampfturbine (4) als Kondensationsturbine ausgebildet ist.

5. Verfahren nach einem der Ansprüche 1 bis 4,
**dadurch gekennzeichnet, dass**
der ausgeleitete Teil des Arbeitsmediums durch Verdichtung auf ein höheres Temperaturniveau angehoben und anschließend kondensiert wird, wobei die anfallende Kondensationswärme als Nutzwärme ausgekoppelt wird.

6. Verfahren nach Anspruch 5,
**dadurch gekennzeichnet, dass**
die Temperatur des ausgeleiteten Teils des Arbeitsmediums vor der Verdichtung ca. 40°C bis ca. 86°C, vorzugsweise ca. 50°C bis 80°C, insbesondere 60°C bis 75°C beträgt.

7. Verfahren nach Anspruch 5 oder 6,
**dadurch gekennzeichnet, dass**
der Druck des ausgeleiteten Teils des Arbeitsmediums vor der Verdichtung ca. 0,07 bar bis ca. 0,60 bar, vorzugsweise ca. 0,12 bis 0,47 bar, insbesondere 0,20 bis 0,39 bar beträgt.

8. Verfahren nach einem der Ansprüche 5 bis 7,
**dadurch gekennzeichnet, dass**
der Druck des ausgeleiteten Teils des Arbeitsmediums durch die Verdichtung auf einen Wert von ca. 0,8 bar bis ca. 1,2 bar, vorzugsweise ca. 0,90 bar bis ca. 1,1 bar, insbesondere ca. 0,95 bis 1,0 bar erhöht wird.

9. Verfahren nach einem der Ansprüche 5 bis 8,
**dadurch gekennzeichnet, dass**
die Temperatur des ausgeleiteten Teils des Arbeitsmediums durch die Verdichtung auf einen Wert von 160°C bis 220°C, vorzugsweise 170°C bis 210°C, insbesondere ca. 180°C bis 200°C, erhöht wird.

10. Verfahren nach einem der Ansprüche 1 bis 4,
**dadurch gekennzeichnet, dass**
die Wärme des ausgeleiteten Teils des Arbeitsmediums in einem ersten Wärmetauscher (10) auf ein weiteres Arbeitsmedium übertragen wird, wobei die übertragene Wärme des Arbeitsmediums als Wärme des weiteren Arbeitsmediums sodann auf ein höheres Temperaturniveau angehoben und anschließend in einem zweiten Wärmetauscher (12, 13) als Nutzwärme in einen Nutzwärmekreislauf (14) ausgekoppelt wird.

11. Verfahren nach Anspruch 10,
**dadurch gekennzeichnet, dass**
die Wärme des ausgeleiteten Teils des Arbeitsmediums zusätzlich über einen Wärmetauscher (15) in den Nutzwärmekreislauf eingekoppelt wird.

12. Verfahren nach Anspruch 10 oder 11,
**dadurch gekennzeichnet, dass**
die Übertragung der Wärme von dem Arbeitsmedium auf das weitere Arbeitsmedium im Verdampfer (10) einer Absorptionswärmepumpe (AWP) als erstem Wärmetauscher erfolgt, wobei das Arbeitsmedium kondensiert, wobei das weitere Arbeitsmedium in der Absorptionswärmepumpe (AWP) als deren Kältemittel zirkuliert und die Nutzwärme im Absorber (13) und/oder im Kondensator (12) der Absorptionswärmepumpe (AWP) als zweitem Wärmetauscher ausgekoppelt wird.

13. Verfahren nach Anspruch 12,
**dadurch gekennzeichnet, dass**
in der Absorptionswärmepumpe (AWP) Wasser als Arbeitsmedium verwendet wird, wobei das Wasser in einer Lithiumbromid-Lösung periodisch in einem Absorber (13) gelöst und in einem Austreiber (11) ausgetrieben wird.

14. Verfahren nach Anspruch 12 oder 13 und 3,
**dadurch gekennzeichnet, dass**
die Antriebsenergie für den Austreiber (11) der Absorptionswärmepumpe (AWP) durch aus einer Entnahmestufe (4b) der Dampfturbine (4) entnommenen Dampf bereitgestellt wird.

15. Verfahren nach Anspruch 14,
**dadurch gekennzeichnet, dass**
der aus einer Entnahmestufe (4b) der Dampfturbine (4) entnommenen Dampf einen Druck von ca. 12 bar aufweist.

16. Verfahren nach Anspruch 14 oder 15,
**dadurch gekennzeichnet, dass**
der aus einer Entnahmestufe (4b) der Dampfturbine (4) entnommenen Dampf eine Temperatur von ca. 250°C aufweist.

17. Verfahren nach einem der Ansprüche 14 bis 16,
**dadurch gekennzeichnet, dass**
die Wärme des aus einer Entnahmestufe (4b) der Dampfturbine (4) entnommenen Dampfes über einen Wärmetauscher (19) direkt in den Nutzwärmekreislauf (14) eingekoppelt wird.

18. Verfahren nach Anspruch 12 oder 13,
**dadurch gekennzeichnet, dass**
die Antriebsenergie für den Austreiber (11) der Absorptionswärmepumpe (AWP) durch Thermalöl oder Heißwasser bereitgestellt wird.

19. Vorrichtung zur Rückgewinnung von Kondensationswärme aus einem thermodynamischen Kreisprozess, wobei die Vorrichtung in einem geschlossenen Leitungszyklus (1) einen Verdichter (2), einen Verdampfer (3), eine Expansionseinheit (4) und einen Kondensator (5) umfasst, wobei der geschlossene Leitungszyklus (1) von einem Arbeitsmedium durchströmbar ist,
**dadurch gekennzeichnet, dass**
die Vorrichtung eine den Kondensator (5) überbrückende Leitungsbrücke (9, 9') aufweist, über welche zumindest ein Teil des Arbeitsmediums ausleitbar ist, wobei die Leitungsbrücke (9) Mittel (AWP, 20, 21) zum Anheben der Wärme des in die Leitungsbrücke (9, 9') ausgeleiteten Arbeitsmediums auf ein höheres Temperaturniveau umfasst und wobei die Wärme anschließend gemäß dem Verfahren nach einem der Ansprüche 1 bis 18 als Nutzwärme in einen Nutzwärmekreislauf (14), insbesondere einen Fernwärmekreislauf, auskoppelbar ist.

20. Vorrichtung nach Anspruch 19,
**dadurch gekennzeichnet, dass**
die Vorrichtung als Dampfkraftanlage ausgebildet ist, wobei der Verdichter als Speisepumpe (2) ausgebildet ist, wobei der Verdampfer als Dampfkessel (3) ausgebildet ist und wobei die Expansionseinheit als Dampfturbine (4) ausgebildet ist.

21. Vorrichtung nach Anspruch 20,
**dadurch gekennzeichnet, dass**
die Dampfkraftanlage vor der das Arbeitsmedium verdichtenden Speisepumpe (2) einen Speisetank (7) aufweist und zwischen dem Kondensator (5) und dem Speisetank (7) eine Kondensatpumpe (6) vorgesehen ist.

22. Vorrichtung nach Anspruch 20 oder 21,
**dadurch gekennzeichnet, dass**
die Vorrichtung hinter dem Dampfkessel (3) einen Überhitzer (8) aufweist.

23. Vorrichtung nach einem der Ansprüche 19 bis 22,
**dadurch gekennzeichnet, dass**
die Mittel zum Anheben der Wärme als Verdichter (20) und dahinter geschalteter Kondensator (21) ausgebildet sind, wobei die in dem Kondensator (21) anfallende Kondensationswärme als Nutzwärme auskoppelbar ist.

24. Vorrichtung nach einem der Ansprüche 20 bis 23,
**dadurch gekennzeichnet, dass**
die Mittel zum Anheben der Wärme als Absorptionswärmepumpe (AWP) ausgebildet sind.

## Claims

1. Method for the recovery of condensation heat from a thermodynamic cycle, in which
- in the thermodynamic cycle a working medium is compressed, vaporised, expanded and condensed in a condenser (5),
- after complete decompression of the working medium, at least a portion of the working medium is discharged from the cycle before it enters the condenser,
- the discharged portion of the working medium bridges the condenser (5),
- the heat from the discharged portion of the working medium is raised to a higher temperature level and then is coupled out as useful heat into a useful heat circuit (14), in particular a district heating circuit, and
- subsequently, the working medium is introduced into the thermodynamic cycle again, so that the discharged portion of the working medium is compressed again together with the portion of the working medium remaining in the thermodynamic cycle.

2. Method according to Claim 1,
**characterised in that**
water is used as the working medium, preferably softened and degassed water.

3. Method according to any one of Claims 1 or 2,
**characterised in that**
the thermodynamic cycle takes place in a steam power plant, wherein the compression of the working medium takes place in a feed pump (2), the evaporation of the working medium takes place in a steam boiler (3), the decompression of the working medium takes place in a steam turbine (4) and the condensation of the working medium takes place in a condenser (5).

4. Method according to Claim 3,
**characterised in that**
the steam turbine (4) is designed as a condensing turbine.

5. Method according to any one of Claims 1 to 4,
**characterised in that**
the discharged portion of the working medium is raised to a higher temperature level by compression and is subsequently condensed, wherein the resulting condensation heat is coupled out as useful heat.

6. Method according to Claim 5,
**characterised in that**
the temperature of the discharged portion of the working medium before compression is approx. 40°C to approx. 86°C, preferably approx. 50°C to 80°C, in particular 60°C to 75°C.

7. Method according to Claim 5 or 6,
**characterised in that**
the pressure of the discharged portion of the working medium before the compression is approx. 0.07 bar to approx. 0.60 bar, preferably 0.12 to 0.47 bar, in particular 0.20 to 0.39 bar.

8. Method according to any one of Claims 5 to 7,
**characterised in that**
the pressure of the discharged portion of the working medium is increased by the compression to a value of approx. 0.8 bar to approx. 1.2 bar, preferably approx. 0.90 bar to approx. 1.1 bar, in particular approx. 0.95 to 1.0 bar.

9. Method according to any one of Claims 5 to 8,
**characterised in that**
the temperature of the discharged portion of the working medium is increased by the compression to a value of 160°C to 220°C, preferably 170°C to 210°C, in particular approx. 180°C to 200°C.

10. Method according to any one of Claims 1 to 4,
**characterised in that**
the heat from the discharged portion of the working medium is in a first heat exchanger (10) transferred to a further working medium, wherein the transferred heat of the working medium is then raised to a higher temperature level as the heat of the further working medium and subsequently in a second heat exchanger (12, 13) is coupled out into a useful heat circuit (14) as useful heat.

11. Method according to Claim 10,
**characterised in that**
the heat of the discharged portion of the working medium is additionally coupled via a heat exchanger (15) into the useful heat circuit.

12. Method according to Claim 10 or 11,
**characterised in that**
the heat is transferred from the working medium to the further working medium in the evaporator (10) of an absorption heat pump (AWP) as the first heat exchanger, wherein the working medium condenses, wherein the further working medium circulates in the absorption heat pump (AWP) as its refrigerant and the useful heat in the absorber (13) and/or in the condenser (12) of the absorption heat pump (AWP) as a second heat exchanger is coupled out.

13. Method according to Claim 12,
**characterised in that**
in the absorption heat pump (AWP) water is used as the working medium, wherein the water is periodically dissolved in a lithium bromide solution in an absorber (13) and expelled in an expeller (11).

14. Method according to Claim 12 or 13 and 3,
**characterised in that**
the drive energy for the expeller (11) of the absorption heat pump (AWP) is provided by steam taken from a removal stage (4b) of the steam turbine (4).

15. Method according to Claim 14,
**characterised in that**
the steam taken from a removal stage (4b) of the steam turbine (4) has a pressure of approximately 12 bar.

16. Method according to Claim 14 or 15,
**characterised in that**
the steam taken from a removal stage (4b) of the steam turbine (4) has a temperature of approx. 250°C.

17. Method according to any one of Claims 14 to 16,
**characterised in that**
the heat of the steam taken from a removal stage (4b) of the steam turbine (4) is coupled via a heat exchanger (19) directly into the useful heat cycle (14).

18. Method according to Claim 12 or 13,
**characterised in that**
the drive energy for the expeller (11) of the absorption heat pump (AWP) is provided by thermal oil or hot water.

19. Device for recovering condensation heat from a thermodynamic cycle, wherein the device comprises a compressor (2), an evaporator (3), an expansion unit (4) and a condenser (5) in a closed line cycle (1), wherein the closed line cycle (1) can be flowed through by a working medium,
**characterised in that**
the device has a line bridge (9, 9') bridging the condenser (5), via which at least a portion of the working medium can be discharged, wherein the line bridge (9) comprises means (AWP, 20, 21) for increasing the heat of the working medium discharged into the line bridge (9, 9') to a higher temperature level, and wherein the heat can subsequently be coupled out as useful heat into a useful heat circuit (14), in particular a district heating circuit, in accordance with the method according to any one of Claims 1 to 18.

20. Device according to Claim 19,
**characterised in that**
the device is designed as a steam power plant, wherein the compressor is designed as a feed pump (2), wherein the evaporator is designed as a steam boiler (3) and wherein the expansion unit is designed as a steam turbine (4).

21. Device according to Claim 20,
**characterised in that**
the steam power plant has a feed tank (7) prior to the feed pump (2) compressing the working medium and a condensate pump (6) is provided between the condenser (5) and the feed tank (7).

22. Device according to Claim 20 or 21,
**characterised in that**
the device after the steam boiler (3) has a superheater (8).

23. Device according to any one of Claims 19 to 22,
**characterised in that**
the means for increasing the heat are designed as a compressor (20) and a subsequently arranged condenser (21), wherein in the condensation heat resulting in the condenser (21) can be coupled out as useful heat.

24. Device according to any one of Claims 20 to 23,
**characterised in that**
the means for increasing the heat are formed as an absorption heat pump (AWP).

## Revendications

1. Procédé de récupération de la chaleur de condensation à partir d'un cycle thermodynamique, selon lequel
- dans le cycle thermodynamique, un fluide de travail est compressé, vaporisé, détendu et condensé dans un condenseur (5),
- après la détente complète du fluide de travail, au moins une partie du fluide de travail est déviée hors du cycle avant l'entrée dans le condenseur,
- la partie déviée du fluide de travail contourne le condenseur (5),
- la chaleur de la partie déviée du fluide de travail est élevée à un niveau de température supérieur et ensuite extraite en tant que chaleur utile dans un circuit de chaleur utile (14), notamment un circuit de chauffage à distance, et
- le fluide de travail est ensuite de nouveau introduit dans le cycle thermodynamique, de sorte que la partie déviée du fluide de travail est de nouveau compressée conjointement avec la partie du fluide de travail qui reste dans le cycle thermodynamique.

2. Procédé selon la revendication 1, **caractérisé en ce que** le fluide de travail utilisé est de l'eau, de préférence de l'eau déminéralisée et dégazée.

3. Procédé selon la revendication 1 ou 2,
**caractérisé en ce que** le cycle thermodynamique se déroule dans une centrale à vapeur, la compression du fluide de travail étant effectuée dans une pompe d'alimentation (2), l'évaporation du fluide de travail dans une chaudière à vapeur (3), la détente du fluide de travail dans une turbine à vapeur (4) et la condensation du fluide de travail dans un condenseur (5).

4. Procédé selon la revendication 3,
**caractérisé en ce que** la turbine à vapeur (4) est réalisée sous la forme d'une turbine à condensation.

5. Procédé selon l'une des revendications 1 à 4, **caractérisé en ce que** la partie déviée du
fluide de travail est élevée à un niveau de température supérieur par compression et ensuite condensée, la chaleur de condensation produite étant extraite en tant que chaleur utile.

6. Procédé selon la revendication 5,
**caractérisé en ce que** la température de la partie déviée du fluide de travail avant la compression est d'environ 40 °C à environ 86 °C, de préférence d'environ 50 °C à 80 °C, notamment de 60 °C à 75 °C.

7. Procédé selon la revendication 5 ou 6, **caractérisé en ce que** la pression de la partie déviée du fluide de travail avant la compression est d'environ 0,07 bar à environ 0,60 bar, de préférence d'environ 0,12 à 0,47 bar, notamment de 0,20 à 0,39 bar.

8. Procédé selon l'une des revendications 5 à 7, **caractérisé en ce que** la pression de la partie déviée du fluide de travail est augmentée par la compression à une valeur d'environ 0,8 bar à environ 1,2 bar, de préférence d'environ 0,90 à environ 1,1 bar, notamment d'environ 0,95 à 1,00 bar.

9. Procédé selon l'une des revendications 5 à 8, **caractérisé en ce que** la température de la partie déviée du fluide de travail est augmentée par la compression à une valeur de 160 °C à 220 °C, de préférence de 170 °C à 210 °C, notamment d'environ 180 °C à 200 °C.

10. Procédé selon l'une des revendications 1 à 4, **caractérisé en ce que** la chaleur de la partie déviée du fluide de travail est transmise à un fluide de travail supplémentaire dans un premier échangeur de chaleur (10), la chaleur transmise du fluide de travail, en tant que chaleur du fluide de travail supplémentaire, étant alors augmentée à un niveau de température supérieur et ensuite extraite dans un deuxième échangeur de chaleur (12, 13) en tant que chaleur utile dans un circuit de chaleur utile (14).

11. Procédé selon la revendication 10, **caractérisé en ce que** la chaleur de la partie déviée du fluide de travail est en plus injectée dans le circuit de chaleur utile par le biais d'un échangeur de chaleur (15).

12. Procédé selon la revendication 10 ou 11, **caractérisé en ce que** la transmission de la chaleur du fluide de travail au fluide de travail supplémentaire s'effectue dans l'évaporateur (10) d'une pompe à chaleur à absorption (AWP) en tant que premier échangeur de chaleur, le fluide de travail étant condensé, le fluide de travail supplémentaire circulant dans la pompe à chaleur à absorption (AWP) en tant que son réfrigérant et la chaleur utile étant extraite dans l'absorbeur (13) et/ou dans le condenseur (12) de la pompe à chaleur à absorption (AWP) en tant que deuxième échangeur de chaleur.

13. Procédé selon la revendication 12, **caractérisé en ce que** de l'eau est utilisée en tant que fluide de travail dans la pompe à chaleur à absorption (AWP), l'eau dans une solution de bromure de lithium étant périodiquement libérée dans un absorbeur (13) puis expulsée dans un dispositif d'expulser (11).

14. Procédé selon la revendication 12 ou 13 et 3, **caractérisé en ce que** l'énergie motrice pour le dispositif d'expulser (11) de la pompe à chaleur à absorption (AWP) est fournie par la vapeur prélevée d'un étage de prélèvement (4b) de la turbine à vapeur (4).

15. Procédé selon la revendication 14, **caractérisé en ce que** la vapeur prélevée d'un étage de prélèvement (4b) de la turbine à vapeur (4) possède une pression d'environ 12 bars.

16. Procédé selon la revendication 14 ou 15, **caractérisé en ce que** la vapeur prélevée d'un étage de prélèvement (4b) de la turbine à vapeur (4) possède une température d'environ 250 °C.

17. Procédé selon l'une des revendications 14 à 16, **caractérisé en ce que** la chaleur de la vapeur prélevée d'un étage de prélèvement (4b) de la turbine à vapeur (4) est injectée directement dans le circuit de chaleur utile (14) par le biais d'un échangeur de chaleur (19).

18. Procédé selon la revendication 12 ou 13, **caractérisé en ce que** l'énergie motrice pour le dispositif d'expulser (11) de la pompe à chaleur à absorption (AWP) est fournie par de l'huile thermique ou de l'eau chaude.

19. Dispositif de récupération de la chaleur de condensation à partir d'un cycle thermodynamique, le dispositif comprenant, dans un cycle de conduite fermé (1), un compresseur (2), un évaporateur (3), une unité d'expansion (4) et un condenseur (5), le cycle de conduite fermé (1) pouvant être parcouru par un courant de fluide de travail, **caractérisé en ce que**
le dispositif possède un pont de conduite (9, 9') qui contourne le condenseur (5), par le biais duquel au moins une partie du fluide de travail peut être déviée, le pont de conduite (9) comprenant des moyens (AWP, 20, 21) servant à élever la chaleur de la partie du fluide de travail déviée dans le pont de conduite (9, 9') à un niveau de température supérieur et la chaleur pouvant ensuite être extraite conformément au procédé selon l'une des revendications 1 à 18 en tant que chaleur utile dans un circuit de chaleur utile (14), notamment un circuit de chauffage à distance.

20. Dispositif selon la revendication 19, **caractérisé en ce que** le dispositif est réalisé sous la forme d'une centrale à vapeur, le compresseur étant réalisé sous la forme d'une pompe d'alimentation (2), l'évaporateur sous la forme d'une chaudière à vapeur (3) et l'unité d'expansion sous la forme d'une turbine à vapeur (4).

21. Dispositif selon la revendication 20, **caractérisé en ce que** la centrale à vapeur possède un réservoir d'alimentation (7) avant la pompe d'alimentation (2) qui compresse le fluide de travail, et une pompe à condensat (6) est disposée entre le condenseur (5) et le réservoir d'alimentation (7).

22. Dispositif selon la revendication 20 ou 21, **caractérisé en ce que** le dispositif possède un surchauffeur (8) derrière la chaudière à vapeur (3).

23. Dispositif selon l'une des revendications 19 à 22, **caractérisé en ce que** les moyens servant à élever la chaleur sont réalisés sous la forme d'un compresseur (20) et d'un condenseur (21) branché en aval de celui-ci, la chaleur de condensation produite dans le condenseur (21) pouvant être extraite en tant que chaleur utile.

24. Dispositif selon l'une des revendications 20 à 23, **caractérisé en ce que** les moyens servant à élever la chaleur sont réalisés sous la forme d'une pompe à chaleur à absorption (AWP).
